(19) **Europäisches Patentamt / European Patent Office / Office européen des brevets**

(11) **EP 1 099 787 B1**

(12) **EUROPÄISCHE PATENTSCHRIFT**

(45) Veröffentlichungstag und Bekanntmachung des Hinweises auf die Patenterteilung:
**11.05.2011 Patentblatt 2011/19**

(51) Int Cl.:
*D04H 5/00* (2006.01) *D04H 5/06* (2006.01)
*D04H 13/00* (2006.01)

(21) Anmeldenummer: **00123903.7**

(22) Anmeldetag: **03.11.2000**

(54) **Fasermatte**

Fibre mat

Mat de fibres

(84) Benannte Vertragsstaaten:
**AT BE CH CY DE DK ES FI FR GB GR IE IT LI LU MC NL PT SE TR**

(30) Priorität: **09.11.1999 DE 19953717**

(43) Veröffentlichungstag der Anmeldung:
**16.05.2001 Patentblatt 2001/20**

(73) Patentinhaber: **Sandler AG
95126 Schwarzenbach/Saale (DE)**

(72) Erfinder:
• **Der Erfinder hat auf seine Nennung verzichtet.**

(56) Entgegenhaltungen:
**US-A- 4 902 559    US-A- 5 456 971
US-A- 5 685 757**

Printed by Jouve, 75001 PARIS (FR)

**Beschreibung**

Die vorliegende Erfindung betrifft eine für Fluide, wie Gase oder Flüssigkeiten, durchlässige Fasermatte mit guten Isolationseigenschaften, aus Mikrofasern aus thermoplastischem Kunststoff, welche sich durch eine hohe Durchlässigkeit, eine geringe Dichte sowie durch gute Stabilität gegenüber aus allen Richtungen angreifenden Zugkräften und auf die Fläche der Fasermatte drückenden Wölbkräften auszeichnet.

Eine Fasermatte der gattungsgemäßen Art, welche in erster Linie für den Einsatz zur Wärmeisolation in Bekleidungsstücken gedacht ist, ist beispielsweise aus der deutschen Auslegeschrift 27 35 063 bekannt. Hierbei handelt es sich um eine Faserbahn aus einer Mischung aus Mikrofasern und Stapelfasern, wobei die Stapelfasern die Aufgabe haben, den Bausch der Fasermatte aus Mikrofasern zu erhöhen. Die Stapelfaserbeimischung zur Erhöhung des Bausches ist deswegen notwendig, weil Mikrofasern im Gegensatz zu Stapelfasern meist ungekräuselt vorliegen und somit keinen Beitrag zur Bauschigkeit liefern.

Eine nach dieser Auslegeschrift gefertigte Fasermatte zeigt jedoch gravierende Nachteile. So haben beispielsweise die der Faserbahn zugeführten Stapelfasern einen wesentlich höheren Faserdurchmesser als die Mikrofasern. Dadurch wird der, durch die Mikrofasern eingebrachte Effekt der besonders guten Wärmeisolation zum Teil reduziert. Es ist nämlich bekannt, dass grobe Fasern eine wesentlich geringere Wärmeisolationsfähigkeit besitzen als feine Fasern.

Um diesen Effekt zu kompensieren, wäre es nötig, diese Faserbahn in einer höheren Flächenmasse zu fertigen.

Weiterhin nachteilig ist, dass die nach der DE 27 35 063 gefertigte Faserbahn eine relativ geringe Stabilität gegen auftretende Zug- oder Druckkräfte, sowie gegen, auf die Fläche der Fasermatte wirkende Wölbkräfte aufweist. Dies macht sich bemerkbar in relativ geringen Festigkeiten in Längs- und Querrichtung, und geringer Wölbkräfte, welche ein sogenanntes "Ausbeulen" des Vliesstoffes bewirken. Ein derartiges "Ausbeulen" würde sich in dem, in der Schrift angegebenen Einsatz als Wärmeisolation in Bekleidungsstücken dann negativ auswirken, wenn die Wärmeisolation, wie es modisch ist, ohne zusätzliche Stütznähte, lediglich im Sattelbereich befestigt wäre. Durch großflächige Walkbewegungen würde sich der Vliesstoff ausbeulen und letztendlich zerstört werden.

Ein weiterer Nachteil ergibt sich aus dem sehr aufwendigen Fertigungsverfahren der in der DE 27 35 063 genannten Fasermatte, bei dem zwei Vliesbildungsaggregate, nämlich eine Vorrichtung zum Schmelzblasen von Vliesstoffen, sowie eine Vorrichtung zur Auflösung und Eindosierung von Stapelfasern benötigt werden.

In der europäischen Patentanmeldung 232 620 wird ein Vliesstoff beschrieben, welcher mit Faserbändern und Fastersträngen versehen ist. Der in dieser Schrift beschriebene Vliesstoff dient in erster Linie zur Herstellung von Schutzkleidung und ist dementsprechend naturgemäß auf eine möglichst geringe Fluiddurchlässigkeit und dementsprechend hohe Dichte ausgelegt.

Es sind weiterhin Vliesstoffe aus Mikrofasern bekannt, welche eine hohe Luftdurchlässigkeit und eine niedere Dichte besitzen. Derartige Vliesstoffe werden im Luftfilterbereich eingesetzt. Diese sind meist zwei- oder mehrschichtig aufgebaut, wobei anströmseitig eine grobe Faserschicht und abströmseitig eine feine Faserschicht vorliegen. Derartig schichtig aufgebaute Luftfiltermedien zeigen häufig den Nachteil, dass feine Partikel oft die in der Regel grobere anströmseitige Schicht durchdringen und sich an der Grenzschicht zur nächst-feineren Schicht zu einer dünnen, aber dichten Partikelschicht ablagern und damit das Filtermedium verschließen. Ein sehr schneller Druckanstieg und eine stark reduzierte Standzeit des Filterelementes sind dann die Folge.

Es ist daher die Aufgabe der vorliegenden Erfindung, eine für Fluide durchlässige, aus mindestens einer Lage, aufgebaute Fasermatte mit niedriger Dichte zur Verfügung zu stellen, deren unkomplizierter Aufbau eine einfache Herstellungsweise ermöglicht, und welche eine gute Stabilität gegenüber aus allen Richtungen angreifenden Zugkräften und auf die Fläche der Fasermatte wirkende Wölbkräfte aufweist.

Eine derartige Fasermatte wird in den Merkmalen des Anspruches 1 beschrieben. Vorteilhafte Ausgestaltungen der Fasermatte sind den Unteransprüchen zu entnehmen.

Die erfindungsgemäße Fasermatte kann in der Konstruktion einer Vielzahl von Gegenständen Verwendung finden, so z. B. als Wärme- und/oder Kälteisolierung in Bekleidungsteilen oder technischen Gegenständen, als Schallisolierung bei der Schalldämmung von technischen Gegenständen, als Adsorbens für hydrophobe Flüssigkeiten, oder als Partikelfilter.

Im Partikelfiltrationsbereich dient die erfindungsgemäße Fasermatte als Filtermedium, beispielsweise zur Herstellung von Filtertaschen, planen Filtereinsätzen oder gefalteten Filtereinsätzen in Filterpatronen oder Kassetten. Eingesetzt werden derartige Filter im HVAC-Bereich, für Motorluftfilter, für Passagierkabinenluftfilter von Kraftfahrzeugen oder für die Zuluftfiltration von elektrischen Maschinen.

Weitere Einsatzmöglichkeiten der erfindungsgemäßen Fasermatte liegen bei Hygieneartikeln, wo sie insbesondere als Mittel zur Aufnahme und Verteilung von Flüssigkeiten sowie als Mittel zur Speicherung von Flüssigkeiten verwendet werden kann.

Diese aufgezählten Anwendungsgebiete der erfindungsgemäßen Fasermatte sind beispielhaft und soll wirkt keinesfalls einschränkend wirken auf nicht erwähnte, oder zukünftig noch in Frage kommende Anwendungen.

Erläuterung der Zeichnungen:

Figur 1 zeigt die erfindungsgemäße Fasermatte schematisch in der Draufsicht.

Figur 2 zeigt eine einlagige Ausführungsform der erfindungsgemäßen Fasermatte im Schnitt.

Figur 3 zeigt eine mehrlagige Ausführungsform der erfindungsgemäßen Fasermatte im Schnitt.

Figur 4 zeigt die Multi-Mikrofilamentstränge schematisch im Schnitt.

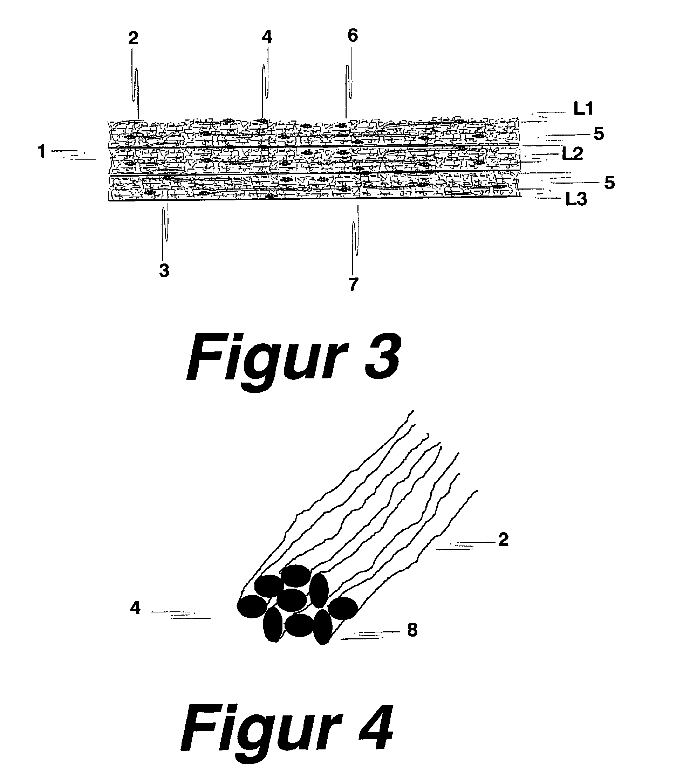

Die erfindungsgemäße Fasermatte **1** ist aus mindestens einer Lage **L** aufgebaut und besteht aus Mikrofasern **3** aus thermoplastischem Kunststoff und besitzt einen maximalen Wert der Dichte von 60 kg/m$^3$. Die Fasermatte **1** besitzt ein zu ihrer planen Fläche weitgehend paralleles Gitternetzwerk aus langen, wirr angeordneten, sich meist überkreuzenden, aus einer Vielzahl von Einzelfilamenten **8** (Figur 4) zusammengesetzten Multi-Mikrofilamentsträngen **2**, welche aus den gleichen Polymeren bestehen wie die Mikrofasern **3**.

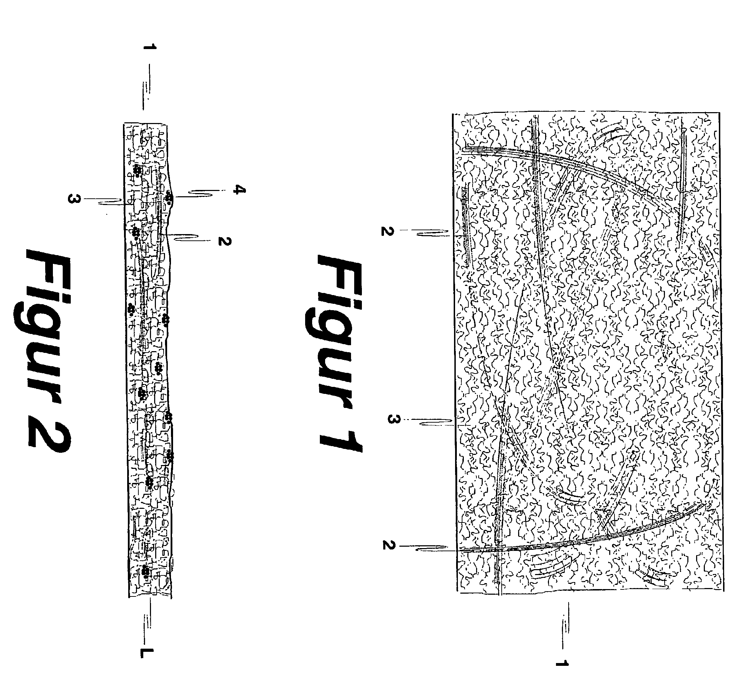

Die Figur 1 zeigt die erfindungsgemäße Fasermatte **1**, mit wirr angeordneten Multi-Mikrofilamentsträngen **2**, welche die aus Mikrofasern **3** aufgebaute Fasermatte **1** verstärken.

Mikrofasern **3** im Sinne der vorliegenden Erfindung sind sehr feine Fasern, mit einem mittleren Faserdurchmesser von ca. 1 - 15 $\mu$m, bevorzugt mit einem mittleren Faserdurchmesser von 3 - 8 pm.

Der Querschnitt der Mikrofasern **3** kann alle möglichen geometrischen Formen, wie z. B. rund, oval, bändchenförmig, unregelmäßig gelappt usw. umfassen.

Die Länge der Mikrofasern **3** kann sehr unterschiedlich sein. So sind Mikrofasern **3** mit einer Länge von 5 mm und mehr geeignet. In einer bevorzugten Ausführungsform der erfindungsgemäßen Fasermatte **1** sind Mikrofasern **3** mit einer Länge mehr als 10 mm vorhanden. In der am meisten bevorzugten Ausführungsform besitzen die Mikrofasern **3** eine Länge von 50 mm und mehr.

Die Mikrofasern **3** können in der Fasermatte **1** weitgehend ungekräuselt oder gekräuselt vorliegen.

In einer ersten bevorzugten Ausführungsform sind die Mikrofasern **3** weitgehend ungekräuselt. Unter weitgehend ungekräuselt im Sinne dieser Erfindung wird verstanden, dass die Faser zwar nicht unbedingt der Ausrichtung einer Geraden entsprechend müssen, sondern beispielsweise auch bogenartig ausgeführt sein können. Dagegen ist eine zickzackähnliche Kräuselung bzw. sinusartige Kräuselung, mit Kräuselbögen, welche zwei- oder dreidimensional angeordnet sind oder eine Kräuselung, bei welcher eine ausgeprägte Primär- und Sekundärkräuselung ausgebildet ist, aber nicht erkennbar.

In einer zweiten, besonders bevorzugten Ausführungsform der Erfindung besitzen mindestens 50 % der Mikrofasern eine Kräuselung. Die Kräuselung der Mikrofasern **3** ist hierbei, anders als es beispielsweise bei gekräuselten textilen Stapelfasern des Standes der Technik der Fall ist, im wesentlichen unregelmäßig ausgebildet, wobei die Kräuselintensität, die Kräuselbogenhöhe und die Kräuselbogenfrequenz innerhalb einer kurzen Faserstrecke sehr stark schwanken können. Die Kräuselbögen können dabei zwei- oder dreidimensional angeordnet sein.

Bei der Kräuselung kann es sich um eine Primärkräuselung handeln. Unter Primärkräuselung im Sinne dieser Erfindung wird eine Zickzackkräuselung oder eine sinusförmige Kräuselung des Faserkörpers selbst verstanden, wobei die mit einer Primärkräuselung versehene Faser in sich meist wieder eine, wenn auch gezackte oder gewellte Gerade bildet.

Der Primärkräuselung übergeordnet kann eine Sekundärkräuselung sein. Diese Sekundärkräuselung besitzt im allgemeinen größere Amplituden sowie größere Wellenlängen als die Primärkräuselung, wobei der, der sekundären Kräuselung unterliegende Faserkörper in sich wieder die primäre Kräuselung besitzen kann.

Die Primärkräuselung der Mikrofasern **3** besitzt eine sehr geringe Amplitude von beispielsweise 0,1 - 1 mm, bei einer Menge von beispielsweise 2 - 100 Kräuselbögen pro cm.

Die Sekundärkräuselung kann eine höhere Amplitude aufweisen und weist im allgemeinen weniger als 10 Kräuselbögen pro cm auf.

Die Kräuselung der Mikrofasern **3** bringt für die erfindungsgemäße Fasermatte **1** den Vorteil, dass der Bausch der Fasermatte **1** erhöht wird, also die Dichte der erfindungsgemäßen Fasermatte **1** erniedrigt wird. Dies lässt sich so erklären, dass aufgrund der Kräuselbögen die sonst plan ausgerichteten Mikrofasern **3** über den Querschnitt der Fasermatte **1** betrachtet, einen Abstand zueinander bewahren können, wobei die erfindungsgemäße Fasermatte **1** eine gute Porosität, also eine gute Durchlässigkeit für Fluide erfährt.

Die Mikrofasern **3** können aus jedem thermoplastischen Kunststoff bestehen. Bevorzugt werden Polymere aus der Gruppe der Polyester, der Polyamide oder der Ethylenvinylacetate. Ganz besonders bevorzugt werden Polymere aus der Gruppe der Polyolefine, Polypropylen oder Polyethylen oder Copolymere davon.

Die Multi-Mikrofilamentstränge **2** der erfindungsgemäßen Fasermatte **1** dienen zur Stabilisierung der erfindungsgemäßen Fasermatte **1** bei Krafteinwirkung aus allen Richtungen, also z. B. Zugkräfte, welche in Längsrichtung der Fasermatte **1** wirken, Kräfte, welche in Quer- und/oder Diagonalrichtung der Fasermatte wirken, und auf die Fläche der Fasermatte wirkende Wölbkräfte, etwa um diese auszubeulen.

Eine derartige Stabilisierung der Fasermatte **1** in Längs-, Quer- und/oder Diagonalrichtung ist beispielsweise für den Einsatz als Wärmeisolierung im Bekleidungsbereich notwendig, wenn beispielsweise die Wärmeisolierung großflächig ohne wesentliche Unterstützungsnähte eingesetzt wird. Eine Stabilisierung der Fasermatte **1** gegenüber auf die Fläche der Fasermatte **1** drückende Wölbkräfte, ist beispielsweise für den Luftfiltereinsatz notwendig, da beispielsweise die in eine, mit einer Fasermatte **1** bestückte Filtertasche eintretende Luft, diese Filtertasche dreidimensional verformen, also ausbeulen kann und diese so unbrauchbar machen kann.

Die Multi-Mikrofilamentstränge **2** können aus ca. 10 bis ca. 10.000 Einzelfilamenten **8** bestehen. Die Einzelfilamente **8** bestehen ihrerseits wieder aus Mikrofasern, welche gekräuselt oder ungekräuselt vorliegen können.

Die Figur 4 zeigt den Querschnitt **4** durch einen Multi-Mikrofilamentstrang **2**, welcher aus einer Vielzahl von Einzelfilamenten **8** zusammengesetzt ist.

Mindestens 50 % der Multi-Mikrofilamentstränge **2** haben eine Länge von 50 mm oder mehr, bevorzugt sind 100 mm oder mehr. In einer besonders bevorzugten Ausführungsform entspricht die Länge der Multi-Mikrofilamentstränge **2** dem, was in der Textilindustrie als "endlos" bezeichnet wird.

Die Länge der Einzelfilamente **8** kann der Länge der Multi-Mikrofilamentstränge **2** entsprechen.

In einer weiteren Ausführungsform können die Einzelfilamente **8** wesentlich kürzer sein, als die Multi-Mikrofilamentstränge **2**. In diesem Fall reihen sich eine Vielzahl von kurzen Einzelfilamenten **8** zu einem Multi-Mikrofilamentstrang **2** zusammen, wobei die Einzelfilamente **8** im Strang, durch eine Kombination von Kräuselungsreibung und Autogenschweißpunkten und gegebenenfalls einer leichten Garndrehung im Multi-Mikrofilamentstrang **2** zusammengehalten werden.

Die Multi-Mikrofilamentstränge **2** verlaufen im wesentlichen parallel zur planen Fläche der Fasermatte **1**. Die Multi-Mikrofilamentstränge **2** sind wirr angeordnet, d. h. sie sind über die Fläche der Fasermatte **1** statistisch verteilt und verlaufen in Längsrichtung, in Querrichtung und in den diagonalen Richtungen. Die Multi-Mikrofilamentstränge **2** können bogenförmig oder zickzackförmig oder sinuslinienförmig in der Fasermatte **1** vorliegen und sich dabei überkreuzen.

Die Multi-Mikrofilamentstränge **2** sind klebemittelfrei mit den Mikrofasern **1** fest verbunden. Die Verbindung erfolgt vorzugsweise über Autogenschweißpunkte bzw. Autogenschweißflächen, welche sich über erweichtes Polymeres gebildet haben.

Der mittlere Durchmesser der Einzelfilamente **8** beträgt ca. 1 - 15 pm, muß aber nicht zwangsläufig mit dem mittleren Durchmesser der Mikrofasern **3** übereinstimmen.

Dadurch, daß sie eine Vielzahl in einer Richtung ausgerichtete und zusammengefaßte Mikrofasern umfassen, bewirken die Multi-Mikrofilamentstränge **2** eine wirkungsvolle Stabilisierung der Fasermatte **1** gegenüber aus allen Richtungen angreifenden Zugkräften und auf die Fläche der Fasermatte **1** wirkende Wölbkräfte.

Die Multi-Mikrofilamentstränge **2** sind in einer relativ hohen Dichte in der erfindungsgemäßen Fasermatte **1** vorhanden. So durchlaufen eine Fläche von 100 cm$^2$ mindestens fünf Multi-Mikrofilamentstränge **2**, in verschiedenen Richtungen.

Die Multi-Mikrofilamentstränge **2** bestehen aus den gleichen Polymeren wie die Mikrofasern **3**.

In einer bevorzugten Ausführungsform ist die erfindungsgemäße Fasermatte **1** einlagig aufgebaut. Das heißt, dass die erfindungsgemäße Fasermatte **1** aus einer einzigen Lage **L** besteht, welche aus Mikrofasern **3** und aus Multi- Mikrofilamentsträngen **2** aufgebaut ist, welche zur planen Fläche der Fasermatte **1** weitgehend parallel angeordnet sind.

Da diese Schicht aus einziger Lage **L** aufgebaut ist, lässt sie sich nicht mechanisch in weitere, untergeordnete Lagen trennen.

Figur 2 zeigt die einlagige Ausführungsform **L** der erfindungsgemäßen Fasermatte **1** in Schnittdarstellung. Hierbei ist ersichtlich, dass die Multi-Mikrofilamentstränge **2** ein wirr angeordnetes, zur planen Fläche weitgehend paralleles Gitternetzwerk bilden. Ein Teil der Multi-Mikrofilamentstränge **2** ist hierbei durchgeschnitten, so dass sie als Querschnitt **4** der Multi-Mikrofilamentstränge **2** sichtbar sind.

Aus der Figur 2 wird ersichtlich, dass die Mikrofasern **3** die Multi-Mikrofilamentstränge **2** umgeben, und ein ineinander verflochtenes Netzwerk bilden, so dass diese einlagige Struktur nicht in weitere untergeordnete Lagen geteilt werden kann.

Innerhalb dieser einen Lage **L** kann in einer bevorzugten Ausführungsform der Erfindung ein Gradient im mittleren Durchmesser der Mikrofasern **3** über den Querschnitt der Fasermatte **1** vorliegen, was bedeutet, daß sich der mittlere Faserdurchmesser der Mikrofasern **3** der Fasermatte **1** ausgehend von einer Seite über den Querschnitt hinweg mehr oder weniger gleichmäßig in Richtung der anderen Seite respektive erhöht oder erniedrigt.

In einer weiteren bevorzugten Ausführungsform ist die erfindungsgemäße Fasermatte **1** aus einer Vielzahl von Lagen **L1, L2, L3**, d.h. mehrlagig, aufgebaut. Die einzelnen Lagen **L1, L2, L3** können hierbei im wesentlichen gleich sein.

Sie können sich allerdings auch voneinander etwas im Faserdurchmesser unterscheiden, wobei ein Gradient im mittleren Durchmesser der Mikrofasern über den Querschnitt der Fasermatte **1** erzeugt wird, was bedeutet, daß sich die Dichte der Fasermatte **1** ausgehend von einer Seite über den Querschnitt hinweg mehr oder weniger gleichmäßig in Richtung der anderen Seite respektive erhöht oder erniedrigt.

Zum Verständnis sei erwähnt, daß die Dicke der Lagen **L1, L2, L3** kaum mehr als 0,1 bis 0,5 mm beträgt, so daß hier ein wesentlicher Unterschied zum Stand der Technik gegeben ist, wo durch den Schichtenaufbau, wie eingangs beschrieben, Probleme beim Einsatz als Luftfilter dadurch entstehen können, daß ein abrupter Übergang des mittleren Faserdurchmessers von einer Schicht zur anderen Schicht vorliegt.

Die Lagen **L1, L2, L3** können weiterhin eine unterschiedliche Anzahl und Größe von Multi-Mikrofilamentsträngen **2** besitzen.

Gekennzeichnet wird ein mehrlagiger Aufbau dadurch, dass die einzelnen miteinander verbundenen Lagen **L1, L2, L3** mechanisch voneinander getrennt werden können.

In diesem Zusammenhang sei erwähnt, daß die Dreilagigkeit kein erfindungswesentliches Merkmal ist. Es können auch zwei oder mehr als drei Lagen vorhanden sein.

Die einzelnen Lagen **L1, L2, L3** sind klebemittelfrei durch Autogenschweißpunkte bzw. Autogenschweißflächen miteinander verbunden. Die Figur 3 zeigt die mehrlagige Ausführungsform der erfindungsgemäßen Fasermatte **1**. Deutlich sind die einzelnen Lagen **L1, L2, L3** zu erkennen, welche durch die Lagengrenzen **5** voneinander getrennt sind. An diesen Lagengrenzen **5** ist eine mechanische Spaltung der mehrlagigen Fasermatte **1** in Einzellagen **L1, L2, L3** durchführbar.

Für die genannten Einsatzzwecke ist es notwendig, dass die erfindungsgemäße Fasermatte **1** durchlässig für Fluide, also Flüssigkeiten oder Gase, ist. Hierbei ist es wichtig, dass die Dichte der Fasermatte **1** einen Wert von 60 kg/cbm nicht übersteigt. In einer besonders bevorzugten Ausführungsform soll die Dichte einen Wert von 40 kg/cbm nicht übersteigen.

Die Dichte der erfindungsgemäßen Fasermatte **1** wird durch die einfache Beziehung

$$\text{Dichte} = \frac{\text{Flächenmasse}}{\text{Dicke}}$$

berechnet.

Dabei ist die Dichte umso geringer, je höher die Dicke der Fasermatte **1** bei konstanter Flächenmasse ist.

Da es sich bei der erfindungsgemäßen Fasermatte **1** um einen zusammendrückbaren Körper handelt, ist es notwendig, dass für die Dickenbestimmung eine Meßmethode mit geringer Vorlast verwendet wird. Die in dieser Schrift angegebene Dicke bezieht sich deshalb auf die Edana-Meßmethode 30.5-99 Abschnitt 5.3. Methode B (Edana = European Disposables and Nonwoven Association mit Sitz in Brüssel).

In einer bevorzugten Ausführungsform ist die Dichte der erfindungsgemäßen Fasermatte **1** homogen über deren Querschnitt verteilt, d.h. sowohl die Oberseite **6** als auch die Mitte als die Unterseite **7** der erfindungsgemäßen Fasermatte besitzen annähernd die gleiche Dichte.

In einer weiteren bevorzugten Ausführungsform besitzt die erfindungsgemäße Fasermatte **1** einseitig eine höhere Dichte, was sich beispielsweise im Einsatz im Luftfilterbereich vorteilhaft auswirken kann.

Die Figur 3 zeigt diese bevorzugte Ausführungsform der erfindungsgemäßen Fasermatte **1**, bei welcher die Oberseite **6** eine niedrigere Dichte aufweist als die Unterseite **7**.

In einer weiteren bevorzugten Ausführungsform besitzt die erfindungsgemäße Fasermatte **1** über deren Querschnitt einen Dichtegradienten, d.h. die Dichte verändert sich kontinuierlich über den Querschnitt der erfindungsgemäßen Fasermatte **1**.

Die erfindungsgemäße Fasermatte **1** kann in einem weiten Flächenmassebereich gefertigt werden, so dass es kaum möglich ist, hier Grenzen anzugeben. Lediglich zur Orientierung seien hier Beispiele für einsetzbare Flächenmassen erwähnt:

| | |
|---|---|
| für den Luftfilterbereich: | 10 - 150 g/qm, |
| für den thermischen Isolationsbereich für Bekleidungsteile | 30 - 200 g/qm |
| für die akustische Isolation | 200 - 2.000 g/qm |
| für Hygieneartikel | 10 - 200 g/m$^2$ |

Es versteht sich von selbst, dass die erfindungsgemäße Fasermatte **1** in unterschiedlichen Ausgestaltungen vorliegen kann.

In einer bevorzugten Ausgestaltung ist die erfindungsgemäße Fasermatte **1** ein- oder beidseitig mit einem Trägermaterial aus der Gruppe der Vliesstoffe, der Gewebe, der Gewirke, der Papiere oder der Gelege abgedeckt. Dies kann beispielsweise zur Verbesserung der Abriebfestigkeit dienen.

In einer weiteren Ausgestaltung kann die erfindungsgemäße Fasermatte **1** beispielsweise ein- oder beidseitig mit Bindemittel versehen sein, ebenfalls um beispielsweise die Abriebfestigkeit zu verbessern.

Natürlich kann die erfindungsgemäße Fasermatte **1** auch mit bestimmten Ausrüstungen versehen sein. Ohne Anspruch auf Vollständigkeit seien hier die schwerentflammbare Ausrüstung, die hydrophobe Ausrüstung, die hydrophile Ausrüstung, die fungizide oder bacterizide Ausrüstung, eine elektrostatische Ausrüstung, eine antielektrostatische Ausrüstung oder eine Ausrüstung mit funktionellen Partikeln, wie z. B. Superabsorber oder geruchsabsorbierenden Substanzen genannt.

## Patentansprüche

1. Für Fluide durchlässige, aus mindestens einer Lage aufgebaute Fasermatte aus Mikrofasern mit einem mittleren Faserdurchmesser von 1 bis 15μm und aus thermoplastischem Kunststoff, welche eine plane Fläche und eine senkrecht dazu verlaufende Dicke umfasst, und bei welcher die Dichte einen Wert von 60 kg/m$^3$ nicht übersteigt, **dadurch gekennzeichnet,** **dass** die Lage (L) der Mikrofasern (3) ein zur planen Fläche weitgehend paralleles Gitternetzwerk aus langen, wirr angeordneten, sich meist überkreuzenden und aus einer Vielzahl von Einzelfilamenten (8) zusammengesetzten Multi-Mikrofilamentsträngen (2) enthält, **dass** die Multi-Mikrofilamentstränge (2) und die Mikrofasern (3) aus den gleichen Polymeren bestehen, **dass mindestens 50 % der Multi-Mikrofilamentstränge (2) eine Länge von 50 mm oder mehr besitzen.** und **dass** die Multi-Mikrofilamentstränge (2) mit den Mikrofasern (3) fest verbunden sind.

2. Fasermatte nach Anspruch1, **dadurch gekennzeichnet,** **dass** die Multi-Mikrofilamentstränge (2) aus 10 bis 10000 Einzelfilamenten (8) bestehen.

3. Fasermatte nach Anspruchl, **dadurch gekennzeichnet,** **dass** die Einzelfilamente (8) in etwa die gleiche Länge besitzen wie die Multi-Mikrofilamentstränge (2).

4. Fasermatte nach Anspruchl, **dadurch gekennzeichnet,** **dass** die Länge der Einzelfilamente (8) geringer ist als die Länge der Multi-Mikrofilamentstränge (2).

5. Fasermatte nach Anspruchl, **dadurch gekennzeichnet,** **dass** mindestens 50 % der Mikrofasern (3) eine Kräuselung besitzen.

6. Fasermatte nach Anspruchl, **dadurch gekennzeichnet,** **dass** die Fasermatte (1) einlagig ist.

7. Fasermatte nach Anspruch1, **dadurch gekennzeichnet,** **dass** die Fasermatte (1) aus einer Vielzahl von übereinanderliegenden, klebemittelfrei miteinander verbundenen Einzellagen (L1, L2, L3) besteht.

8. Fasermatte nach Anspruch1, **dadurch gekennzeichnet,** **dass** der thermoplastische Kunststoff aus einem Polymer aus der Gruppe der Polyester, der Polyamide, der Polyolefine, wie Polypropylen oder Polyethylen oder einem Copolymeren davon, oder der Ethlenvinylacetate besteht.

9. Fasermatte nach Anspruch1, **dadurch gekennzeichnet,** **daß** die Dichte der Fasermatte (1) einen Wert von 40 kg/m$^3$ nicht übersteigt.

10. Fasermatte nach Anspruch1, **dadurch gekennzeichnet,**

**dass** sie ein- oder beidseitig mit einem Trägermaterial aus der Gruppe der Vliesstoffe, der Gewebe, der Gewirke, der Papiere oder der Gelege abgedeckt ist.

**Claims**

1. For a fluid-permeable fibre mat made of at least one layer consisting of microfibres with a mean fibre diameter of 1 to 15$\mu$m and consisting of thermoplastic material that comprises a plane surface and thickness extending perpendicularly to it, and in which the density does not exceed 60 kg/m$^3$,
   **characterised in that**
   the layer (L) of the microfibres (3) contain a lattice network that is extensively parallel to the plane surface consisting of long, randomly oriented, mostly crossing multiple microfilament hanks (2) and consisting of multiple of combined individual filaments (8),
   the multiple microfilament hanks (2) and the microfibres (3) consist of the same polymers,
   at least 50 % of the multiple microfilament hanks (2) have lengths of 50 mm or more,
   and that the multiple microfilament hanks (2) are firmly connected with the microfibres (3).

2. The fibre mat according to claim 1,
   **characterised in that**
   the multiple microfilament hanks (2) consist of 10 to 10000 individual filaments (8).

3. The fibre mat according to claim 1,
   **characterised in that**
   the individual filaments (8) have approximately the same length as the multiple microfilament hanks (2).

4. The fibre mat according to claim 1,
   **characterised in that**
   the length of individual filaments (8) is less than that of the multiple microfilament hanks (2).

5. The fibre mat according to claim 1,
   **characterised in that**
   at least 50 % of the microfibres (3) have a crimp.

6. The fibre mat according to claim 1,
   **characterised in that**
   the fibre mat (1) is one layer.

7. The fibre mat according to claim 1,
   **characterised in that**
   the fibre mat (1) consists of a multitude of individual layers (L1, L2, L3) lying over one another, connected together without adhesive.

8. The fibre mat according to claim 1,
   **characterised in that**
   the thermoplastic material consists of a polymer of the polyester, polyamides, polyolefin group, such as polypropylene or polyethylene or a copolymer thereof, or ethylene-vinyl acetate.

9. The fibre mat according to claim 1,
   **characterised in that**
   the density of the fibre mat (1) does not exceed 40 kg/m$^3$.

10. The fibre mat according to claim 1,
    **characterised in that**
    it is covered on one side or both sides with a substrate belonging to the group of fleece of fabrics, knitted fabrics, paper or scrim.

**Revendications**

1. Natte en fibres perméable aux fluides, formée d'au moins une couche de microfibres présentant un diamètre moyen compris entre 1 et 15 microns et de matière synthétique thermoplastique comprenant une surface plane et une épaisseur perpendiculaire à ladite surface, et dont la densité ne dépasse pas une valeur de 60 kg/m$^3$,
   **caractérisée en ce que**
   la couche (L) de microfibres (3) contient un réseau en grille principalement parallèle à la surface plane, composé de brins multi-microfilamentaires (2) longs, agencés emmêlés, se croisant généralement et composés d'un grand nombre de filaments individuels (8),
   les brins multi-microfilamentaires (2) et les microfibres (3) se composent des mêmes polymères,
   au moins 50 % des brins multi-microfilamentaires (2) ont une longueur de 50 mm ou plus
   et **en ce que** les brins multi-microfilamentaires (2) sont fermement reliés aux microfibres (3).

2. Natte de fibres selon la revendication 1,
   **caractérisée en ce que**
   les brins multi-microfilamentaires (2) se composent de 10 à 10 000 filaments individuels (8).

3. Natte de fibres selon la revendication 1,
   **caractérisée en ce que**
   les filaments individuels (8) possèdent approximativement la même longueur que les brins multi-microfilamentaires (2).

4. Natte de fibres selon la revendication 1,
   **caractérisée en ce que**
   la longueur des filaments individuels (8) est inférieure à la longueur des brins multi-micro-filamentaires (2).

5. Natte de fibres selon la revendication 1,
   **caractérisée en ce que**
   au moins 50 % des microfibres (3) sont crépues.

6. Natte de fibres selon la revendication 1,
   **caractérisée en ce que**
   la natte de fibres (1) se compose d'une couche.

7. Natte de fibres selon la revendication 1,
   **caractérisée en ce que**
   la natte de fibres (1) se compose d'un grand nombre de couches individuelles (L1, L2, L3) en superposition, reliées entre elles sans colle.

8. Natte de fibres selon la revendication 1,
   **caractérisée en ce que**
   la matière synthétique thermoplastique se compose d'un polymère du groupe des polyesters, des polyamides, des polyoléfines, telles que de polypropylène ou de polyéthylène, ou d'un copolymère de ces produits, ou du groupe des acétates d'éthylène vinyle.

9. Natte de fibres selon la revendication 1,
   **caractérisée en ce que**
   la densité de la natte de fibres (1) ne dépasse pas une valeur de 40 kg/m$^3$.

10. Natte de fibres selon la revendication 1,
    **caractérisée en ce qu'elle**
    est recouverte sur un côté ou les deux d'un matériau support issu du groupe des non-tissés, des textiles, des mailles, des papiers ou des matériaux couchés.

**Figur 1**

**Figur 2**

## Figur 3

## Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2735063

- EP 232620 A